# EUROPÄISCHE PATENTSCHRIFT

(11) **EP 2 822 430 B1**
(45) Veröffentlichungstag und Bekanntmachung des Hinweises auf die Patenterteilung: **09.11.2022**
(21) Anmeldenummer: 13703452.6
(22) Anmeldetag: 12.02.2013
(51) Int. Cl.: A47J 31/44, G07F 13/06, A47J 31/40, A47J 31/60, G07F 11/00, G07F 5/18, F16L 13/14, G07F 9/02

(54) **GETRÄNKEVERKAUFSAUTOMAT SOWIE AUSLAUFMODUL FÜR EINEN SOLCHEN GETRÄNKEVERKAUFSAUTOMATEN**
BEVERAGE VENDING MACHINE AND OUTFLOW MODULE FOR SUCH A BEVERAGE VENDING MACHINE
AUTOMATE DE VENTE DE BOISSONS AINSI QUE MODULE DE VERSEMENT POUR UN AUTOMATE DE VENTE DE BOISSONS DE CE TYPE

(30) Priorität: 09.03.2012 CH 342122012
(43) Veröffentlichungstag der Anmeldung: 14.01.2015
(73) Patentinhaber: Schaerer AG, 4528 Zuchwil (CH)
(72) Erfinder: EGLI, Peter, CH-3037 Herrenschwanden (CH); LÜSSI, André, CH-3303 Jegenstorf (CH); MOSIMANN, Bruno, CH-3415 Rüegsauschachen (CH); AEBERHARD, Bruno, CH-4528 Zuchwil (CH)
(74) Vertreter: IPrime Rentsch Kaelin AG
(86) Internationale Anmeldenummer: PCT/EP2013/052779
(87) Internationale Veröffentlichungsnummer: WO 2013/131722

(56) Entgegenhaltungen:
- EP-A1- 0 373 985
- EP-A1- 0 538 191
- EP-A1- 0 820 715
- EP-A1- 1 626 375
- EP-A1- 1 626 375
- EP-A1- 2 011 421
- EP-A1- 2 011 422
- EP-A1- 2 078 481
- EP-A1- 2 189 085
- EP-A1- 2 198 762
- EP-A1- 2 220 972
- WO-A1-2009/130099
- WO-A1-2011/139151
- WO-A2-2006/090183
- WO-A2-2009/140349
- DE-A1-102004 025 037
- DE-C1- 4 137 324
- DE-U1- 8 907 183
- DE-U1- 20 102 048
- DE-U1-202007 008 814
- DE-U1-202011 051 719
- US-A- 5 189 949
- US-A1- 2006 230 943
- US-A1- 2009 214 742

## Beschreibung

### TECHNISCHES GEBIET

Die vorliegende Erfindung bezieht sich auf das Gebiet der Getränkeverkaufsautomaten. Sie betrifft einen Getränkeverkaufsautomaten gemäss dem Oberbegriff des Anspruchs 1. Sie betrifft weiterhin ein Auslaufmodul für einen solchen Getränkeverkaufsautomaten.

### STAND DER TECHNIK

Im Stand der Technik sind Getränkeverkaufsautomaten bekannt, welche in grossen Stückzahlen bei relativ günstigen Kosten hergestellt werden. Solche Automaten bieten einem Benutzer zu einem günstigen Preis verschiedene frisch zubereitete Getränke an, wie z.B. Milchkaffe, Cappuccino, Latte Macchiato, heisse Schokolade, Instantsuppe, etc. Nach Bezahlung mit einem Bezahlsystem, wie z.B. einem Geldprüfsystem, einem elektronischen Bezahlsystem, etc., wird dem Benutzer das gewünschte Getränk beispielsweise in einem Trinkbecher zubereitet, welcher beim Bezug des Getränks oft automatisch bereitgestellt wird. Die Qualität der Getränke bei Selbstbedienungs-Getränkeautomaten ist jedoch insbesondere bei Kaffeegetränken nicht immer befriedigend, da das Getränk meist durch Mischung von Pulver mit heissem Wasser hergestellt wird. Die Verwendung von Pulver hat allerdings den Vorteil, dass eine vergleichsweise grosse Anzahl unterschiedlicher Getränke kostengünstig zur Verfügung gestellt werden können.

Qualitativ hochwertige Getränke werden einem Benutzer in Lokalitäten wie einer Bar oder einem Restaurant angeboten. Dort wird das Getränk beispielsweise mit einer handbedienten oder automatischen, qualitativ hochstehenden Spezialmaschine hergestellt. Insbesondere mit handbedienten Kaffeemaschinen können Kaffeegetränke einer hochstehenden Qualität zubereitet werden. Sie erfordern jedoch einen erheblichen Bedienungs- sowie Wartungsaufwand und können von ungeschulten Personen kaum richtig bedient werden. In dieser Art zubereitete Getränke sind zwar qualitativ hochstehend, aber relativ teuer.

Getränkeverkaufsautomaten für die Herstellung von qualitativ hochstehenden Kaffeegetränken bei günstigeren Kosten sind ebenfalls bekannt. Solche Getränkeverkaufsautomaten werden aufgrund einer Spezifikation hergestellt, weiche Anforderungen eines bestimmten Standorts oder einer Standortkategorie entsprechen. Standortkategorien umfassen beispielsweise Schulen, Werkstätten, Freizeitanlagen, Museen, Bürogebäude, etc. Je nach Standort oder Standortkategorie kann es erforderlich sein, Frischmilch, Milchpulver, mehrere Kaffeesorten oder Zusatzstoffe wie Schokoladenpulver oder Sirup anzubieten. Nachdem die Anforderungen festgelegt sind, werden die Bauteile des Getränkeverkaufsautomaten ausgewählt und daraus der entsprechende Getränkeverkaufsautomaten hergestellt, welcher das gewünschte Angebot an Getränken anbietet.

Die WO 2006/090183 A2 betrifft einen Apparat zur Herstellung und Ausgabe von Getränken, insbesondere Kaffeegetränke, die ein Minimum an Handarbeit erfordert. In der einfachsten Ausführung wird ein Apparat gezeigt, der in Betriebszuständen («operating modes») arbeitet, wobei ein erster Betriebszustand ein Erhalten von Instruktionen von einem Anwender vorsieht, und ein zweiter Betriebszustand die Wartung und Reinigung vorsieht und ein Wechsel zwischen den beiden Zuständen automatisch erfolgt.

Die EP 1 626 375 A1 betrifft einen Verkaufsautomaten und befasst sich mit der Kontrolle von Ausgabemaschinen, die mit elektronischen Kennzeichen versehen sind. Diese Ausgabegeräte sollen mit Modulen ausgestattet sein. Ein besonderes Beispiel wird in Form einer Espresso- und Cappuccino-Maschine erwähnt, welche ein Kaffeebraumodul, ein Flüssigmilchmodul zur Aufbereitung von flüssiger Milch aus Granulat und ein weiteres Modul zur Wasserfiltrierung umfassen kann, sowie ein zugehöriges Kontrollmodul.

Die WO 2009/130099 A1 betrifft eine Kaffeemaschine. Dabei soll eine Kaffeemaschine bereitgestellt werden, welche bequem zu reinigen ist und insbesondere die durch Verschmutzung durch Kaffeepulver und/oder durch das fertige Getränk unterworfenen Teile besonders einfach und bequem zu reinigen sind. Dazu sind strukturelle Module vorgesehen, wobei die Module herausnehmbar sein sollen.

Für eine Massenanfertigung sind solche Getränkeverkaufsautomaten jedoch weniger geeignet, da die Vorgaben verschiedener Standorte oder Standortkategorien sehr unterschiedlich sind. Um alle Anforderung von Standorten oder Standortkategorien zu erfüllen, wäre eine unübersichtliche Anzahl unterschiedlicher Getränkeverkaufsautomaten erforderlich.

### DARSTELLUNG DER ERFINDUNG

Es ist daher eine Aufgabe der Erfindung, einen Getränkeverkaufsautomaten zu schaffen, welcher flexible konfiguriert werden kann und sich durch eine einfache Bedienung und Wartung auszeichnet.

Es ist weiterhin eine Aufgabe der Erfindung, ein Auslaufmodul für einen solchen Getränkeverkaufsautomaten anzugeben.

Diese und andere Aufgaben werden durch die Merkmale des unabhängigen Anspruchs 1 gelöst.

Der Getränkeverkaufsautomat der Erfindung mit einem Gehäuse, in welchem erste Mittel zum Aufbrühen und Ausgeben eines mit frisch gemahlenem Kaffee bereiteten Kaffeegetränks untergebracht sind, zeichnet sich dadurch aus, dass die ersten Mittel modular aufgebaut sind und wenigstens ein Basismodul zum Aufbrühen des Kaffeegetränks sowie ein separates Auslaufmodul zum Ausgeben des Kaffeegetränks umfassen, die über eine oder mehrere Fluidschnittstellen miteinander in fluidischer Verbindung stehen.

Erfindungsgemäss umfasst das Basismodul wenigstens eine Kaffeemühle, eine Brüheinheit, zweite Mittel zum Erzeugen von Heisswasser, eine Fluidschnittstelle zum Anschliessen einer Wasseranschlussleitung, eine elektrische Schnittstelle zum Anschliessen einer Netzanschlussleitung sowie dritte Mittel zur Steuerung des Getränkezubereitungs- und Ausgabevorgangs umfasst.

Insbesondere umfassen die dritten Mittel ein Bedien/Steuerteil.

Eine andere Ausgestaltung ist dadurch gekennzeichnet, dass im Gehäuse ein oder mehrere weitere Module untergebracht sind, welche mit dem Basismodul und/oder dem Auslaufmodul und/oder untereinander über entsprechende Fluidschnittstellen miteinander in fluidischer Verbindung stehen.

Insbesondere stehen die weiteren Module über entsprechende elektrische Schnittstellenmit dem Basismodul in elektrischer Verbindung, und werden über das Basismodul mit elektrischer Energie versorgt und durch die dritten Mittel des Basismoduls in ihrer Funktion gesteuert.

Gemäss einer anderen Ausgestaltung umfassen die weiteren Module ein oder mehrere Milchmodule.

Insbesondere weist der Getränkeverkaufsautomat einen Oberteil und einen Unterteil auf, wobei das oder die Milchmodul(e) im Unterteil angeordnet ist (sind).

Eine andere Ausgestaltung des Getränkeverkaufsautomaten nach der Erfindung ist dadurch gekennzeichnet, dass die weiteren Module ein oder mehrere Sirupmodule umfassen.

Gemäss einer weiteren Ausgestaltung umfassen die weiteren Module ein oder mehrere Pulvermodule.

Es ist aber auch denkbar, dass die weiteren Module ein Reinigungsmodul umfassen.

Besonders vorteilhaft ist es, wenn gemäss einer weiteren Ausgestaltung der Erfindung die Sirupmodule bzw. Reinigungsmodule an einer vertikalen Wand im Inneren des Getränkeverkaufsautomaten hängend und austauschbar befestigt sind.

Insbesondere weisen die Sirupmodule bzw. Reinigungsmodule jeweils eine mit einer Rückwand an die Wand hängbare Halterung auf, die mit einer Bodenschale zum Einstellen eines Sirupbehälters bzw. Reinigungsmittelbehälters und einem Pumpengehäuse mit einer darin angeordneten Siruppumpe bzw. Reinigungsmittelpumpe ausgestattet ist.

Eine noch andere Ausgestaltung ist dadurch gekennzeichnet, dass das Basismodul in einem eigenen, insbesondere spritzwassergeschützten, Gehäuse untergebracht und über schwingungsdämpfende Füsse im Getränkeverkaufsautomat stehend montiert ist.

Vorzugsweise ist unterhalb der Brüheinheit im Gehäuse des Basismoduls eine Durchwurföffnung für den Kaffeesatz angeordnet.

Auch ist es vorteilhaft, wenn oberhalb der wenigstens einen Kaffeemühle und ausserhalb des Gehäuses des Basismoduls ein der Kaffeemühle zugeordneter Bohnenbehälter angeordnet ist.

Das erfindungsgemässe Auslaufmodul für einen Getränkeverkaufsautomaten nach der Erfindung umfasst ein, vorzugsweise abgewinkeltes und aus einem Metallblech bestehendes, Tragelement, auf dem ein abnehmbares Gehäuse zur Führung verschiedener Fluide, insbesondere Milch und/oder Luft und/oder Dampf und/oder Heisswasser und/oder Kaffee, einrastend befestigt ist.

Eine Ausgestaltung des Auslaufmoduls nach der Erfindung ist dadurch gekennzeichnet, dass eine austauschbare Mischkammer mit einem nach unten gerichteten Auslass zur Bildung von Milchschaum vorgesehen ist.

Insbesondere verläuft im Gehäuse eine Dampfleitung, auf deren Ende die Mischkammer aufsteckbar ist.

Vorzugsweise ist die Mischkammer nach Art eines Bajonettverschlusses am Gehäuse einrastbar.

Eine andere Ausgestaltung des Auslaufmoduls ist dadurch gekennzeichnet, dass am Gehäuse ein Heisswasserauslass und eine Kaffeeleitung zur Ausgabe von Heisswasser bzw. Kaffee in ein unter dem Auslaufmodul stehendes Gefäss entlang geführt sind.

Eine weitere Ausgestaltung ist dadurch gekennzeichnet, dass das Tragelement eine das Gehäuse tragende Grundplatte aufweist, und dass in der Grundplatte Öffnungen für den Auslass von Sirup bzw. von einem unter Verwendung von Pulver angemischten Getränk vorgesehen sind.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: eine vereinfachte Darstellung eines Getränkeverkaufsautomaten in der Ansicht von vorne;
- Fig. 2: die Anordnung der verschiedenen Module im Inneren eines solchen Getränkeverkaufsautomaten gemäss einem Ausführungsbeispiel der Erfindung;
- Fig. 3: ein vereinfachtes Schaltschema für das elektrische und fluidische Zusammenwirken der einzelnen Module im Getränkeautomaten gemäss Fig. 2;
- Fig. 4: in einer vereinfachten Blockdarstellung die verschiedenen Funktionseinheiten in einem Basismodul gemäss Fig. 2;
- Fig. 5: in einer perspektivischen Darstellung die tatsächliche Ausgestaltung des Basismoduls gemäss Fig. 2 mit den Funktionseinheiten gemäss Fig. 4;
- Fig. 6: in einer perspektivischen Darstellung ein beispielhaftes Milchrnodul gemäss Fig. 2 mit seinen wesentlichen Funktionselementen;
- Fig. 7: in einer perspektivischen Darstellung ein beispielhaftes Pulvermodul gemäss Fig. 2 mit seinen wesentlichen Funktionselementen;
- Fig. 8: in einer perspektivischen Darstellung ein beispielhaftes Sirupmodul gemäss Fig. 2 mit seinen wesentlichen Funktionselementen;
- Fig. 9: in zwei verschiedenen perspektivischen Ansichten (a) und (b) ein beispielhaftes Auslaufmodul gemäss Fig. 2 mit seinen wesentlichen Funktionselementen; und
- Fig. 10: in einer zu Fig. 8 vergleichbaren Darstellung ein beispielhaftes Reinigungsmodul.

### WEGE ZUR AUSFÜHRUNG DER ERFINDUNG

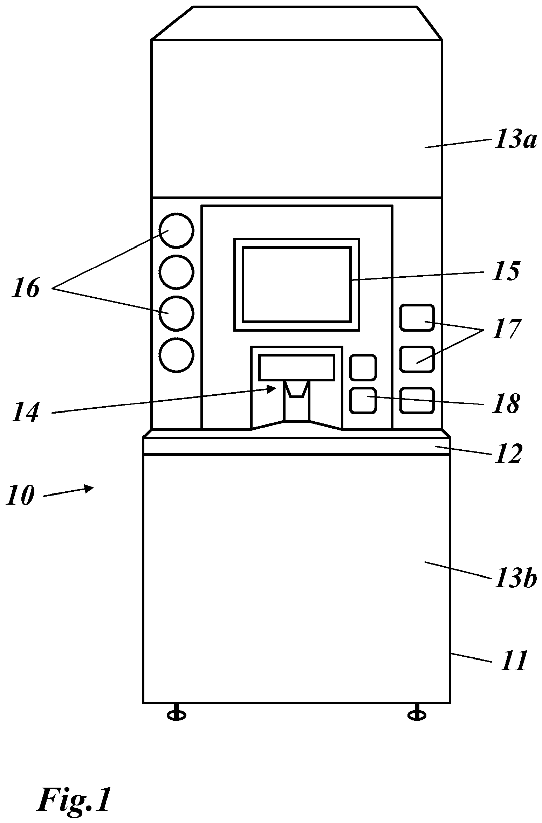

In Fig. 1 ist in einer vereinfachten Darstellung in der Ansicht von vorne ein beispielhafter Getränkeverkaufsautomat 10 wiedergegeben, der nach Art der eingangs erläuterten Kiosklösung für die Abgabe und Bezahlung von Kaffee-basierten Getränken ausgebildet ist.

Der Getränkeverkaufsautomat 10 ist in einem Gehäuse 11 untergebracht, welches einen Oberteil 13a und einen Unterteil 13b aufweist, die durch eine Konsole 12 getrennt sind, weiche eine ebene für die Ausgabe der Getränk gebildet. Die eigentliche Getränkeausgabe 14 ist in einem zurückspringenden Raum oberhalb der Konsole 12 angeordnet. Oberhalb der Getränkeausgabe ist eine Bedien/Anzeigeeinheit 15 angeordnet, die beispielsweise mit einer Touchscreen ausgestattet ist und zur Wahl und Anzeige des zuzubereitenden Getränks dient. Auf der linken Seite sind seitlich Becherschächte 16 angeordnet, aus denen Becher zur Aufnahme des Getränks entnommen werden können. Auf der rechten Seite sind seitlich Fächer 17 angeordnet, in denen Zucker, Löffel oder dergleichen bereitgehalten werden. Des Weiteren ist eine Bezahleinheit 18 vorgesehen, die zur Bezahlung des gewählten Getränks mittels Münzen oder Chipkarte dient. Selbstverständlich können die einzelnen Elemente 14-18 auch anders angeordnet sein, oder andere Elemente zusätzlich oder ersatzweise vorgesehen werden.

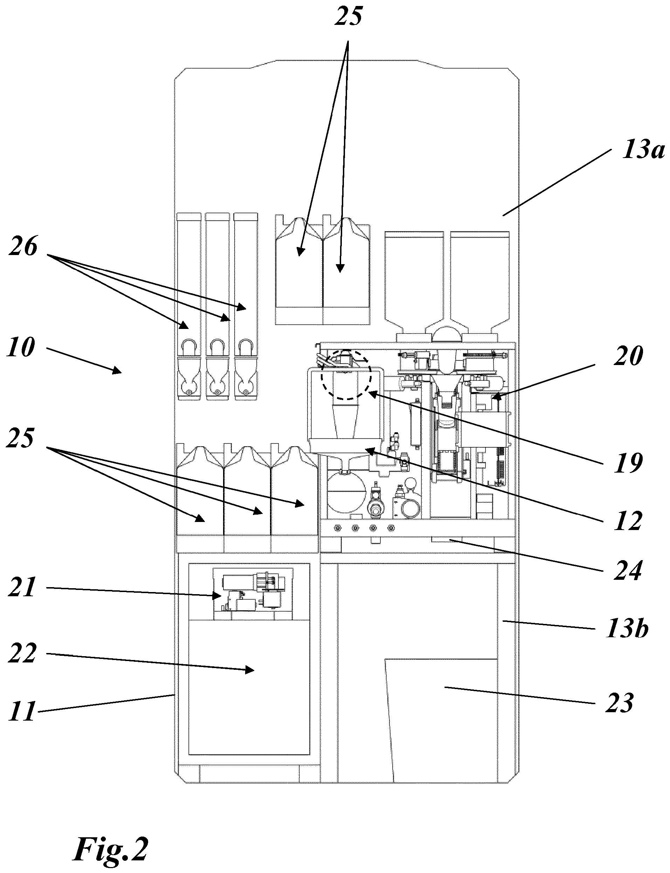

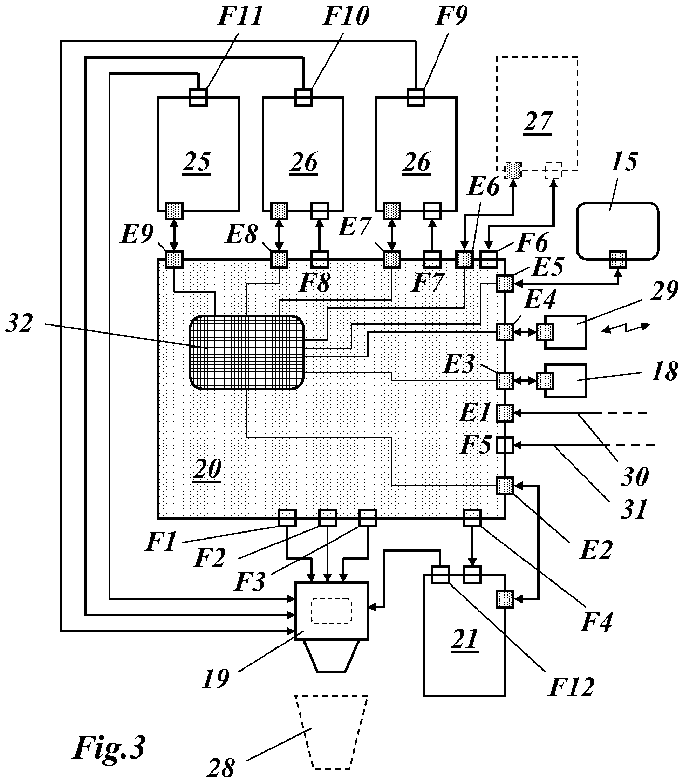

Gemäss der vorliegenden Erfindung wird der Getränkeverkaufsautomat 10 gemäss Fig. 1 mit einem vorteilhaften inneren Aufbau versehen, der anhand des Ausführungsbeispiels in Fig. 2 und des Anlagenschemas aus Fig. 3 nachfolgend erläutert werden soll.

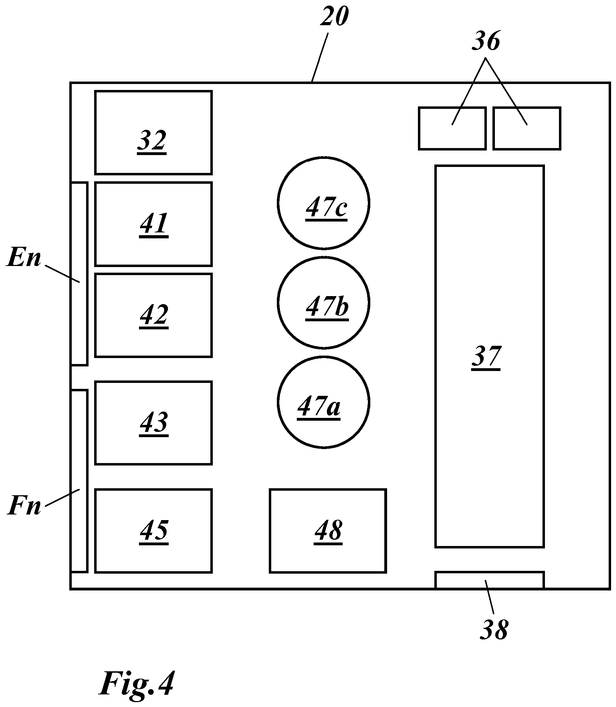

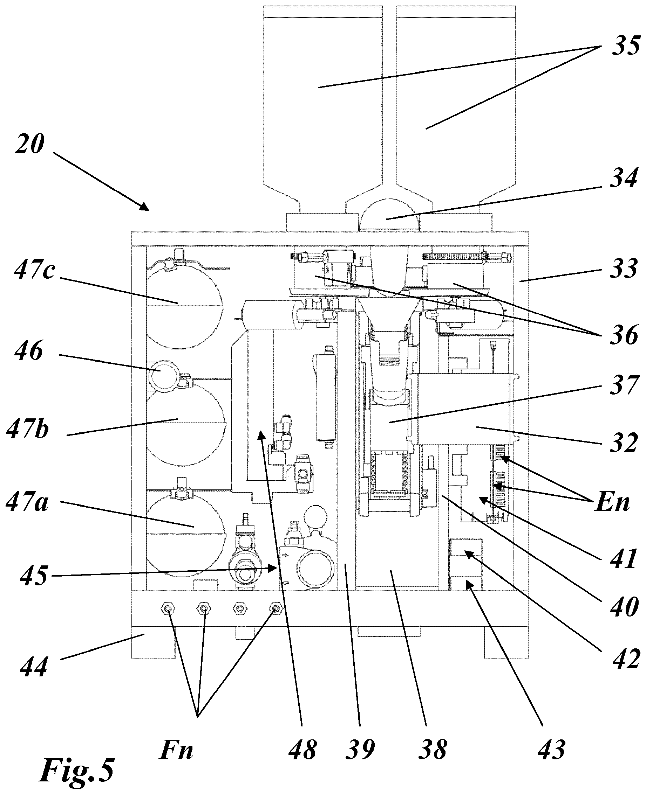

Zentraler Bestandteil des inneren Aufbaus des Getränkeverkaufsautomaten gemäss Fig. 2 ist ein in sich geschlossenes Basismodul 20, weiches zur Zubereitung eines Kaffeegetränks unter Verwendung von frisch gemahlenem Kaffee ausgebildet ist und dessen Funktionseinheiten in Fig. 4 schematisch und in Fig. 5 in ihrer tatsächlichen Ausgestaltung wiedergegeben sind. Neben dem Basismodul 20 gehört zur Grundausrüstung des Automaten ein Auslaufmodul 19 (in Fig. 2 im gestrichelten Kreis erkennbar), welches fluidisch über Fluidschnittstellen (F1-F3 in Fig. 3) mit dem Basismodul 20 verbunden ist und für die Ausgabe des Kaffeegetränks in einen darunter stehenden Becher 28 oder dergleichen zuständig ist. Anders als bei herkömmlichen Kaffeemaschinen ist der Auslauf nicht fest in die Maschine (hier: das Basismodul) integriert, sondern separat als Modul ausgebildet und daher eigenständig platzierbar. Auf diese Weise ist es möglich, das Basismodul 20 - wie in Fig. 2 erkennbar - im Getränkeverkaufsautomaten aus der Mitte heraus auf die Seite zu verschieben, wodurch sich eine grössere Flexibilität in der Ausgestaltung des Automaten ergibt.

Im Ausführungsbeispiel gemäss Fig. 2, 4 und 5 enthält das Basismodul 20 einen Bedien/Steuerteil 32 zur Steuerung der Getränkezubereitung, Überwachung des Automaten und der vorhandenen Vorräte an Pulver, Sirup, Kaffeebohnen etc.. Des weiteren enthält das Basismodul 20 eine Brüheinheit 37, die zum Aufbrühen von Kaffee vorgesehen ist, sowie mit der Brüheinheit 37 zusammen wirkende Kaffeemühlen 36, mit denen unterschiedliche Kaffeesorten gemahlen und für die Getränkezubereitung bereitgestellt werden können. Unterhalb der Brüheinheit ist eine Durchwurföffnung 38 platziert, durch die nach Beendigung des Brühvorgangs der verbleibende Kaffeesatz aus dem Basismodul 20 in einen darunter stehenden, grösseren Kaffeesatzbehälter 23 (Fig. 2) geworfen werden kann. Die Brüheinheit 37 ist vorzugsweise als vollständig aus Kunststoff bestehende Einheit ausgebildet, wie sie beispielsweise in den Druckschriften WO 93/02605 A1 oder WO 2009/027259 A2 oder WO 2009/056426 A1 offenbart ist.

Für die Getränkezubereitung sind im Basismodul 20 des Ausführungsbeispiels drei Boiler 47a-c vorgesehen, von denen der erste als Dampfboiler, der zweite als Heisswasserboiler und der Dritte als Kaffeeboiler eingesetzt wird. Für die Verteilung von Wasser und Dampf ist eine mehrere Ventile umfassende Ventilanordnung 48 vorgesehen. Die Versorgung mit Frischwasser erfolgt über eine Wasserpumpe 45. Halbleiterrelais 43 (SSR) sind für die Steuerung der Boilerheizungen und der Wasserpumpe 45 zuständig. Die elektrische Versorgung erfolgt über ein Netzteil 42, dem ein Leistungsteil 41 nachgeordnet ist. Für den Anschluss an ein elektrisches Netz und die elektrische Verbindung mit anderen Modulen innerhalb des Getränkeverkaufsautomaten sind elektrische Schnittstellen En vorgesehen. Für den Anschluss an eine Wasserleitung und die fluidische beziehungsweise hydraulische Verbindung mit anderen Modulen innerhalb des Getränkeverkaufsautomaten sind fluidische Schnittstellen Fn vorgesehen.

Das Basismodul 20 ist das "Herz"des Getränkeverkaufsautomaten und enthält alle Komponenten, welche benötigt werden, um Kaffee und Dampf zu produzieren. Zudem enthält es die komplette Intelligenz des kompletten Gerätes und verfügt über die verschiedenen Schnittstellen En und Fn, mit der andere Module im Automaten an das Basismodul 20 fluidisch und elektrisch angeschlossen werden können.

Gemäss Fig. 5 ist das Basismodul 20 in einem stabilen Gehäuse 33 untergebracht, welches von vorne geöffnet werden kann. Auf der Oberseite des Gehäuses 33 ist oberhalb der Brüheinheit 37 eine Einwurföffnung 34 für Reinigungstabletten angeordnet. Die unterhalb der Brüheinheit 37 vorgesehene Durchwurföffnung für den Durchwurf des Kaffeesatzes ist gegen Eingreifen geschützt. Aus Sicherheitsgründen ist das Gehäuse 33 nicht ohne Werkzeug zu öffnen. Nur der Brühraum mit der Brüheinheit 37 kann ohne Werkzeug geöffnet werden, damit die Brüheinheit gereinigt werden kann. Eine Überwachung durch Sicherheitsschalter kann vorgesehen werden. Darüber hinaus ist das Gehäuse 33 soweit abgedichtet, dass ein Überlauftest bestanden wird. Im Inneren hat das Basismodul 20 eine Aufteilung mittels einer Trennwand 39 und eines Schutzgehäuses 40, so dass wasserführende Teile, der Brühraum mit der Brüheinheit 37 und die Elektronik voneinander getrennt sind. Insbesondere sind die oberhalb der Kaffeemühle 36 angeordneten Bohnenbehälter 35 und die Kaffeemühle 36 selbst durch die Trennwand 39 von den Boilern 47a-c thermisch getrennt.

Die Boiler 47a-c sind vorzugsweise als Kugelboiler ausgebildet und haben jeweils Anschlusswerte von 2, 3 oder 6 kW und ein Volumen von etwa 1 l. Sie sind im Basismodul 20 leicht austauschbar angebracht und werden mit Manometern 46 (Fig. 5) überwacht, die von aussen sichtbar sind.

Die elektrischen Schnittstellen En (n Laufindex) können wie folgt spezifiziert sein:
- Ethernet; über das Ethernet kann ein separates GUI angeschlossen werden;
- Abrechnungsschnittstelle MDB;
- USB; Anbindung von Kommunikationsmodulen wie IrdA, WLAN et.;
- RS485; je nach gewählter Modul-Architektur dient diese Schnittstelle zum anbinden von weiteren Modulen;
- I/O für Module; je nach gewählter Modul-Architektur dient diese Schnittstelle zum anbinden von weiteren Modulen;
- Alarmausgänge;
- 24 VDC für weitere Module;
- Überwachung Kaffeesatzbehälter 23;
- Versorgungsspannung für weitere Module;
- Netzzuleftung (1-phasig oder 3-phasig).

Die Fluidschnittstellen Fn (n Laufindex) können wie folgt spezifiziert sein:
- Kaffee; Schnittstelle für gebrühten Kaffee zum Auslaufmodul 19 (F1 in Fig. 3);
- Heisswasser; Schnittstelle für Heisswasser zum Auslaufmodul 19 (F2 in Fig. 3);
- Dampf; Schnittstelle verdampft zum Auslaufmodul 19 (F3 in Fig. 3);
- Pulver; Schnittstellen für Heisswasser zu den Pulvermodulen 26 (F7, F8 in Fig. 3);
- Frischwasser; Schnittstelle für den Anschluss von Frischwasser (F5 in Fig. 3);
- Reinigungsmittel; Schnittstelle für Kaffeereinigung (optional).

Wie man aus Fig. 5 erkennt, sind die Fluidschnittstellen Fn unten am Gehäuse 33 des Basismoduls 20 angeordnet, während die elektrische Schnittstellen En seitlich zugänglich sind. Das Basismodul 20 ist mit seinem Gehäuse 33 über schwingungsdämpfende Füsse 44 im Getränkeverkaufsautomat 10 auf der Höhe der Konsole stehend montiert (Fig. 2, 5). Hierdurch werden die von den Kaffeemühlen 36 ausgehenden Körperschwingungen vom Gehäuse 11 des Automaten zusätzlich entkoppelt.

Neben dem Auslaufmodul 19 arbeiten weitere Module mit dem Basismodul 20 zusammen, werden von diesem gesteuert und sind mit diesem oder mit dem Auslaufmodul 19 oder auch untereinander durch entsprechende Fluidschnittstellen fluidisch verbunden. Im Ausführungsbeispiel der Fig. 2 sind als weitere Module fünf Sirupmodule 25, drei Pulvermodule 26 und ein Milchmodul 21 vorgesehen. Die Sirupmodule 25 sind mit dem Auslaufmodul 19 fluidisch verbunden und geben beispielsweise zur Aromatisierung des Kaffeegetränks vorbestimmten Mengen Sirup ab. Die Pulvermodule 26 halten Getränkepulver bereit, die zusammen mit kaltem oder heissem Wasser zur Bereitung anderer Getränke wie Tee oder dergleichen verwendet werden. Das Milchmodul 21 ist unterhalb der Konsole im Unterteil 13b des Getränkeverkaufsautomaten angeordnet und fördert Milch aus einem Milchbehälter, der in einer darunter liegenden Kühleinheit 22 gekühlt gelagert ist.

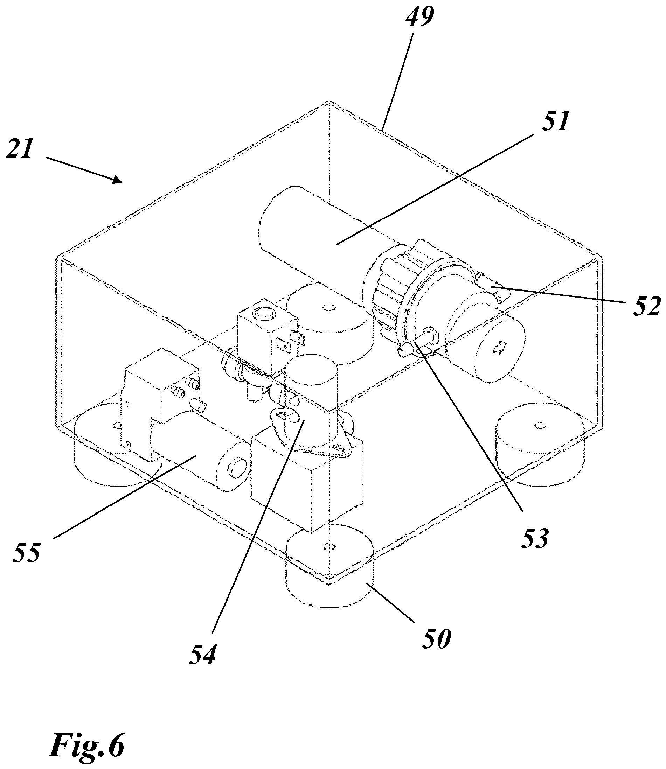

Der beispielhafte Aufbau eines Milchmoduls 21 ist in Fig. 6 wiedergegeben. In einem Gehäuse 49, dass auf schwingungsdämpfenden Füssen 50 stehend befestigt ist, ist liegend eine Milchpumpe 51 angeordnet, die über einen Ansaugschlauch 52 Milch aus dem darunter befindlichen Milchbehälter ansaugt und über einen Förderschlauch 53 abgibt. Ein Quetschventil 54 ermöglicht das Umschalten zwischen Milchpumpen und Spülen der Milch führenden Leitungen. Um die Milch unabhängig vom Dampf aufschäumen zu können, ist im Milchmodul 21 zusätzlich eine Luftpumpe 55 vorgesehen, die Druckluft zum aufschäumen in die Milch eingeführt.

Das Milchmodul 21 hat elektrische Schnittstellen für die Milchpumpe 51, dass Quetschventil 54, die Luftpumpe 55, einen Niveausensor am Milchbehälter und gegebenenfalls ein Spülventil. Eine Fluidschnittstelle ist für die Zuführung von Spülwasser vorhanden (Fluidschnittstelle F4 Fig. 3). Eine weitere Fluidschnittstelle (F12) betrifft die Verbindung für die Milch zum Auslaufmodul 19.

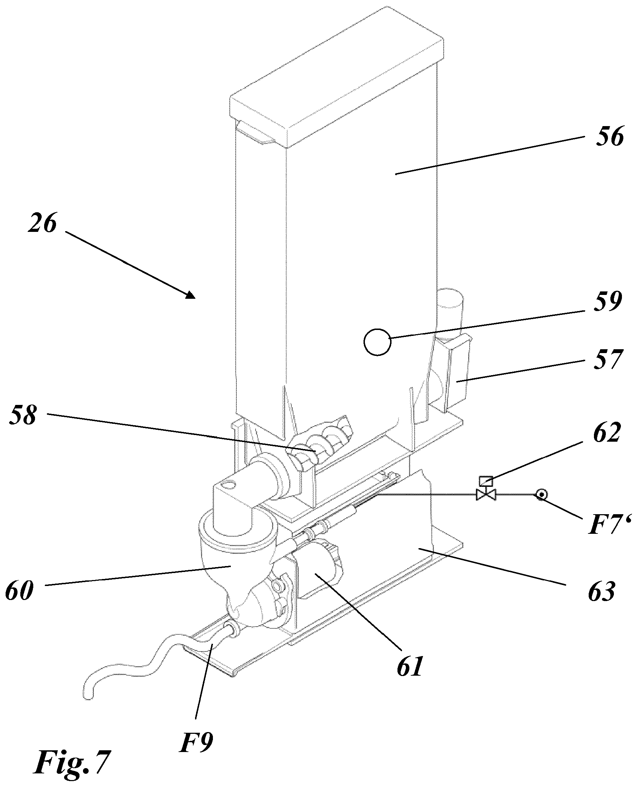

Der beispielhafte Aufbau eines Pulvermoduls 26 ist in Fig. 7 in einer teilweise geschnittenen Darstellung wiedergegeben. Dem Pulvermodul 26 wird über eine Fluidschnittstelle F7'mit steuerbaren Wasserventil 62 Wasser zugeführt, welches in einem Mischertrichter 60 einläuft. Von oben in den Mischertrichter 60 gelangt Pulver aus einem Pulverbehälter 56, das von einer Förderschnecke 58, die von einem Fördermotor 57 angetrieben wird, in den Trichter befördert wird. Unterhalb des Mischertrichters 60 wird das Gemisch aus Wasser und Pulver mittels eines Mischermotors 61 vermischt und dann über eine Fluidschnittstelle F9 (oder F10 in Fig. 3) an das Auslaufmodul 19 abgegeben. Das Pulvermodul 26 ist in einem Gehäuse 63 untergebracht und an einer vertikalen Wand im Getränkeverkaufsautomaten hängend befestigt. Der Pulverbehälter 56 hat beispielsweise einen Volumen von 4 l und ist mit einem Niveausensor 59 ausgestattet. Elektrische Schnittstellen En betreffen den Mischermotor 61, den Fördermotor 57, dass Wasserventil 62 und dem Niveausensor 59. Die Fluidschnittstelle F7' ist für die Zuführung von Heisswasser vorgesehen.

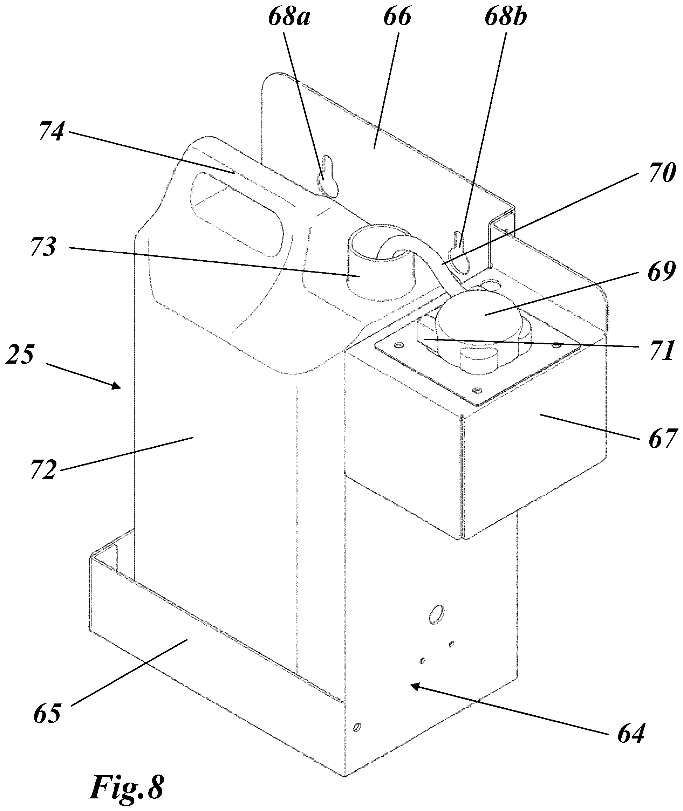

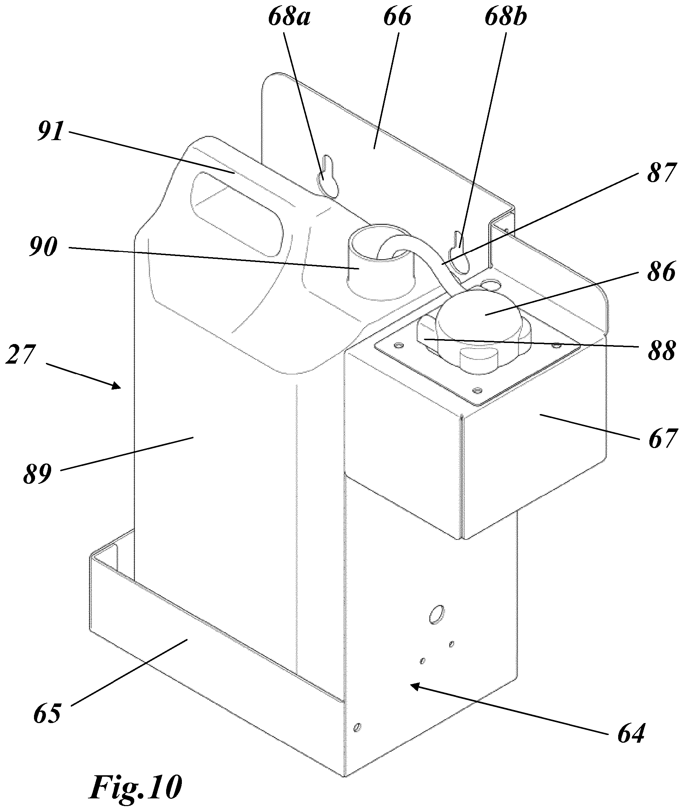

Das Sirupmodul 25 (Fig. 8) und das Reinigungsmodul 27 (Fig. 10) sind gleichartig aufgebaut. In beiden Fällen ist eine Halterung 64 vorgesehen, die eine vertikale Rückwand 66 mit Montagelöchern 68a,b aufweist, sowie eine Bodenschale 65, in die ein Sirupbehälter 72 beziehungsweise ein Reinigungsmittelbehälter 89 austauschbar eingesetzt werden können. Seitlich ist an der Halterung 64 ein Pumpengehäuse 67 angeordnet, in dem eine Siruppumpe 69 beziehungsweise eine Reinigungsmittelpumpe 86 untergebracht sind. Die Pumpen 69, 86 Saugern über einen Ansaugschlauch 70 bzw. 87 über eine Ausgabeöffnung 73 bzw. 90 sirup bzw. Reinigungsmittel aus dem jeweiligen Behälter 72 bzw. 89 und geben dies dann über einen Pumpenauslass 71 bzw. 88 an eine entsprechende Fluidschnittstelle ab. Zum einfachen Austausch der Behälter 72 bzw. 89 sind diese mit einem entsprechenden Tragegriff 74 bzw. 91 versehen. Sirupmodule und Reinigungsmodule können mittels der Montagelöcher 68a,b auf einfache Weise an derselben Wand hängend angebracht werden, wie die Pulvermodule. Auf dise Weise lässt sich durch Auswahl der Module das Gesamtsystem sehr einfach und flexibel an unterschiedliche Anforderungen anpassen. Desgleichen können Module sehr einfach ausgetauscht werden.

Die Sirupmodule 25 haben elektrischen Schnittstellen für die Siruppumpe 69 und einen Niveausensor (E9 in Fig. 3), sowie als Fluidschnittstelle eine Verbindung zum Auslaufmodul 19 (F11 in Fig. 3).

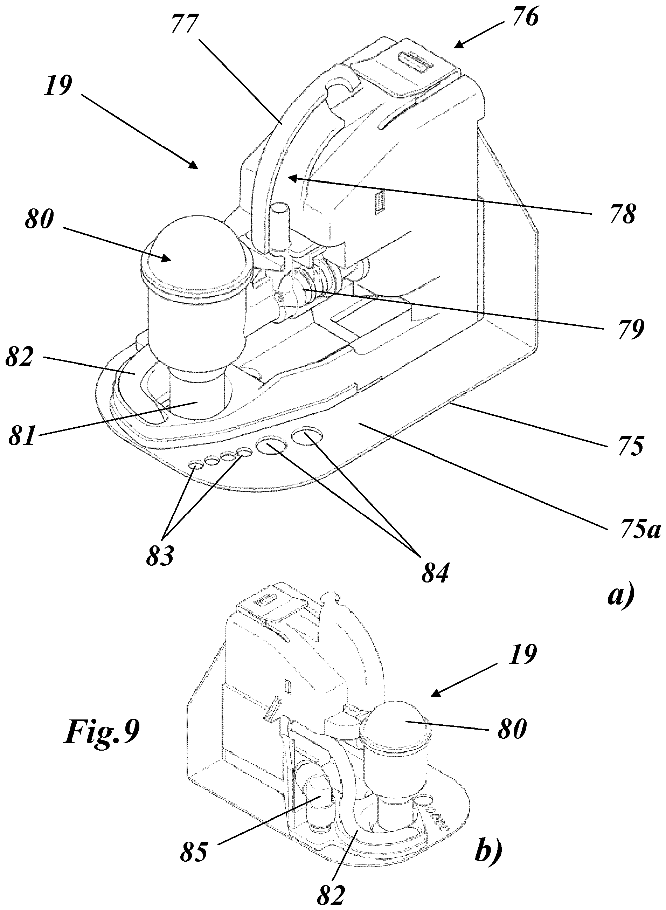

Von besonderer Bedeutung sind der Aufbau und die Ausgestaltung des Auslaufmoduls 19, die in Fig. 9 wiedergegeben sind. Das Auslaufmodul 19 umfasst ein abgewinkeltes Tragelement 75 aus einem Metallblech mit einer horizontalen Grundplatte 75a. Auf der horizontalen Grundplatte 75a ist ein aus Kunststoff bestehendes Gehäuse 77 abnehmbar gelagert und mittels einer Rastvorrichtung 76 einrastend gehalten. Das Gehäuse 77 ist zur Führung verschiedener Fluide, insbesondere Milch und/oder Luft und/oder Dampf und/oder Heisswasser und/oder Kaffee vorgesehen.

Das Auslaufmodul 19 weist eine austauschbare Mischkammer 80 für die Mischung von Milch bzw. Milch/Luft mit Dampf zur Bildung von Milchschaum auf, die mit einem nach unten gerichteten Auslass 81 versehen ist. Im Gehäuse 77 verläuft eine Dampfleitung 79, auf deren Ende die Mischkammer 80 aufsteckbar ist, wobei die Mischkammer 80 nach Art eines Bajonettverschlusses am Gehäuse 77 einrastbar ist. Aufbau, Funktion und Befestigung entsprechen der Offenbarung in der Druckschrift DE 20 2011 051719.5 (Deutsches Gebrauchsmuster).

Weiterhin sind am Gehäuse 77 seitlich ein Heisswasserauslass 85 und eine Kaffeeleitung 82 zur Ausgabe von Heisswasser bzw. Kaffee in ein unter dem Auslaufmodul 19 stehendes Gefäss (Becher 28) entlang geführt. Für die Ausgabe von Sirup (aus den Sirupmodulen 25) bzw. einem unter Verwendung von Pulver angemischten Getränk (aus den Pulvermodulen 26) sind in der Grundplatte 75a seitlich Öffnungen (Sirupdurchgänge 83, Pulvergetränk-Durchgänge 84) vorgesehen, durch die mittels nicht dargestellter Elemente (Rohre etc.) der Auslass von Sirup bzw. Pulvergetränken in den Becher 28 erfolgen kann.

Das Zusammenwirken von Basismodul 20, Auslaufmodul 19 und den übrigen Modulen 21, 25, 26 und 27 ist nach Art eines Schaltplans mit dem zugehörigen elektrischen Schnittstellen En und Fluidschnittstellen Fn in Fig. 3 wiedergegeben. Wasser wird über eine Wasseranschlussleitung 31 und die Fluidschnittstelle F5 dem Basismodul 20 zugeführt. Strom wird dem Basismodul 20 über eine Netzanschlussleitung 30 und die elektrische Schnittstelle E1 zugeführt.

Das Milchmodul 21 erhält vom Basismodul 20 Spülwasser über die Fluidschnittstelle F4 und gibt über die Fluidschnittstelle F12 Milch an das Ausfaufmodul 19 ab. Stromversorgung und Signalaustausch erfolgen über die elektrische Schnittstelle E2.

Ein (beispielhaftes) Sirupmodul 25 ist elektrisch über die elektrische Schnittstelle E9 mit dem Basismodul 20 verbunden und gibt über die Fluidschnittstelle F11 Sirup an das Auslaufmodul 19 ab.

Die beiden Pulvermodule 26 sind elektrisch über die elektrischen Schnittstellen E7 und E8 mit dem Basismodul 20 verbunden, erhalten über die Fluidschnittstellen F7 und F8 Heisswasser aus dem Basismodul 20 und geben die zubereiteten Getränke über Fluidschnittstellen F9 bzw. f10 an das Auslaufmodul 19 ab.

Ein optionales Reinigungsmodul 27 ist über die elektrische Schnittstelle E6 mit dem Basismodul verbunden und speist über die Fluidschnittstelle F6 Reinigungsmittel in das Basismodul 20 ein.

An das zentrale Bedien/Steuerteil 32 kann über die elektrische Schnittstelle E5 eine externe Bedien/Anzeigeeinheit (GUI) angeschlossen werden. Desgleichen kann über eine elektrische Schnittstelle E4 ein drahtlos arbeitendes Kommunikationsmodul 29 angeschlossen werden. Eine Bezahleinheit 18 ist schliesslich über die elektrische Schnittstelle E3 mit dem Basismodul 20 verbunden.

### Bezugszeichenliste

- 10: Getränkeverkaufsautomat
- 11: Gehäuse
- 12: Konsole
- 13a: Oberteil
- 13b: Unterteil
- 14: Getränkeausgabe
- 15: Bedien/Anzeigeeinheit (z.B. Touchscreen)
- 16: Becherschacht
- 17: Fach
- 18: Bezahleinheit
- 19: Auslaufmodul
- 20: Basismodul
- 21: Milchmodul
- 22: Kühleinheit
- 23: Kaffeesatzbehälter
- 24: Fallöffnung
- 25: Sirupmodul
- 26: Pulvermodul
- 27: Reinigungsmodul
- 28: Becher
- 29: Kommunikationsmodul
- 30: Netzanschlussleitung
- 31: Wasseranschlussleitung
- 32: Bedien/Steuerteil
- 33: Gehäuse (Basismodul)
- 34: Einwurföffnung (für Reinigungstablette)
- 35: Bohnenbehälter
- 36: Kaffeemühle
- 37: Brüheinheit
- 38: Durchwurföffnung
- 39: Trennwand
- 40: Schutzgehäuse (Elektrik)
- 41: Leistungsteil
- 42: Netzteil
- 43: Haibleiterrelais (SSR)
- 44,50: Fuss (z.B. schwingunsdämpfend)
- 45: Wasserpumpe
- 46: Manometer
- 47a-c: Boiler
- 48: Ventilanordnung
- 49: Gehäuse (Milchmodul)
- 51: Milchpumpe
- 52: Ansaugschlauch
- 53: Förderschlauch
- 54: Quetschventil
- 55: Luftpumpe
- 56: Pulverbehälter
- 57: Fördermotor
- 58: Förderschnecke
- 59: Niveausensor
- 60: Mischertrichter
- 61: Mischermotor
- 62: Wasserventil
- 63: Gehäuse
- 64: Halterung (Sirupmodul, Reinigungsmodul)
- 65: Bodenschale
- 66: Rückwand
- 67: Pumpengehäuse
- 68a,b: Montageloch
- 69: Siruppumpe
- 70: Ansaugschlauch
- 71: Pumpenauslass
- 72: Sirupbehälter
- 73: Ausgabeöffnung
- 74: Tragegriff
- 75: Tragelement (abgewinkelt)
- 75a: Grundplatte (Tragelement)
- 76: Rastvorrichtung
- 77: Gehäuse
- 78: Milch/Luftkanal
- 79: Dampfleitung
- 80: Mischkammer
- 81: Auslass (Mischkammer)
- 82: Kaffeeleitung
- 83: Sirup-Durchgang
- 84: Pulvergetränk-Durchgang
- 85: Heisswasserauslass
- 86: Reinigungsmittelpumpe
- 87: Ansaugschlauch
- 88: Pumpenauslass
- 89: Reinigungsmittelbehälter
- 90: Ausgabeöffnung
- 91: Tragegriff
- E1 -E9: elektrische Schnittstelle
- F1-F12: Fluidschnittstelle
- F7': Fluidschnittstelle◆

## Patentansprüche

1. Getränkeverkaufsautomat (10) mit einem Gehäuse (11), in welchem
erste Mittel (19, 20, 21, 22, 25, 26) zum Aufbrühen und Ausgeben eines mit frisch gemahlenem Kaffee bereiteten Kaffeegetränks untergebracht sind, wobei die ersten Mittel (14, 20, 21, 22, 25, 26) modular aufgebaut sind und
wenigstens ein Basismodul (20) zum Aufbrühen des Kaffeegetränks sowie ein separates Auslaufmodul (19) zum Ausgeben des Kaffeegetränks umfassen, die über eine oder mehrere Fluidschnittstellen (F1, F2, F3) miteinander in fluidischer Verbindung stehen, und wobei
das Basismodul (20) wenigstens eine Kaffeemühle (36), eine Brüheinheit (37), zweite Mittel (47a-c) zum Erzeugen von Heisswasser, eine Fluidschnittstelfe (F5) zum Anschliessen einer Wasseranschlussleitung (31), eine elektrische Schnittstelle (E1) zum Anschliessen einer Netzanschlussleitung (30) sowie dritte Mittel (32, 41, 42, 43) zur Steuerung des Getränkezubereitungs- und Ausgabevorgangs umfasst, und die dritten Mittel (32, 41, 42, 43) ein Bedien/Steuerteil (32) umfassen, und **dadurch gekennzeichnet, dass** das Basismodul ein in sich geschlossenes Basismodul ist.

2. Getränkeverkaufsautomat nach Anspruch 1, **dadurch gekennzeichnet, dass** im Gehäuse (11) ein oder mehrere weitere Module (21, 25, 26, 27) untergebracht sind, welche mit dem Basismodul (20) und/oder dem Auslaufmodul (19) und/oder untereinander über entsprechende Fluidschnittstellen (F4, F6-F12) miteinander in fluidischer Verbindung stehen.

3. Getränkeverkaufsautomat nach Anspruch 2, **dadurch gekennzeichnet, dass** die weiteren Module (21, 25, 26, 27) über entsprechende elektrische Schnittstellen (E2-E9) mit dem Basismodul (20) in elektrischer Verbindung stehen, und über das Basismodul (20) mit elektrischer Energie versorgt und durch die dritten Mittel (32, 41, 42, 43) des Basismoduls in ihrer Funktion gesteuert werden.

4. Getränkeverkaufsautomat nach einem der Ansprüche 2 bis 3, **dadurch gekennzeichnet, dass** die weiteren Module (21, 25, 26, 27) ein oder mehrere Milchmodule (21) umfassen.

5. Getränkeverkaufsautomat nach Anspruch 4, **dadurch gekennzeichnet, dass** der Getränkeverkaufsautomat (10) einen Oberteil (13a) und einen Unterteil (13b) aufweist, und dass das oder die Milchmodul(e) (21) im Unterteil (13b) angeordnet ist (sind).

6. Getränkeverkaufsautomat nach einem der Ansprüche 2 bis 6, **dadurch gekennzeichnet, dass** die weiteren Module (21, 25, 26, 27) ein oder mehrere Sirupmodule (25) umfassen.

7. Getränkeverkaufsautomat nach einem der Ansprüche 2 bis 6, **dadurch gekennzeichnet, dass** die weiteren Module (21, 25, 26, 27) ein oder mehrere Pulvermodule (26) umfassen.

8. Getränkeverkaufsautomat nach einem der Ansprüche 2 bis 7, **dadurch gekennzeichnet, dass** die weiteren Module (21, 25, 26, 27) ein Reinigungsmodul (27) umfassen.

9. Getränkeverkaufsautomat nach Anspruch 6 oder 8, **dadurch gekennzeichnet, dass** die Sirupmodule (25) bzw. Reinigungsmodule (27) an einer vertikalen Wand im Inneren des Getränkeverkaufsautomaten (10) hängend und austauschbar befestigt sind.

10. Getränkeverkaufsautomat nach Anspruch 9, **dadurch gekennzeichnet, dass** die Sirupmodule (25) bzw. Reinigungsmodule (27) jeweils eine mit einer Rückwand (66) an die Wand hängbare Halterung (64) aufweisen, die mit einer Bodenschale (65) zum Einstellen eines Sirupbehälters (72) bzw. Reinigungsmittelbehälters (89) und einem Pumpengehäuse (67) mit einer darin angeordneten Siruppumpe (69) bzw. Reinigungsmittelpumpe (86) ausgestattet ist.

11. Getränkeverkaufsautomat nach Anspruch 1, **dadurch gekennzeichnet, dass** das Basismodul (20) in einem eigenen, insbesondere spritzwassergeschützten, Gehäuse (33) untergebracht und über schwingungsdämpfende Füsse (44) im Getränkeverkaufsautomat (10) stehend montiert ist.

12. Getränkeverkaufsautomat nach Anspruch 11, **dadurch gekennzeichnet, dass** unterhalb der Brüheinheit (37) im Gehäuse (33) des Basismoduls (20) eine Durchwurföffnung (38) für den Kaffeesatz angeordnet ist.

13. Getränkeverkaufsautomat nach Anspruch 11 oder 12, **dadurch gekennzeichnet, dass** oberhalb der wenigstens einen Kaffeemühle (36) und ausserhalb des Gehäuses (33) des Basismoduls (20) ein der Kaffeemühle (36) zugeordneter Bohnenbehälter (35) angeordnet ist.

14. Getränkeverkaufsautomaten (10) nach einem der Ansprüche 1 bis 13, **dadurch gekennzeichnet, dass** das Auslaufmodul (19) ein Tragelement (75) umfasst, auf dem ein abnehmbares Gehäuse (77) zur Führung verschiedener Fluide, insbesondere Milch und/oder Luft und/oder Dampf und/oder Heisswasser und/oder Kaffee, einrastend befestigt ist.

15. Getränkeverkaufsautomat nach Anspruch 14, **dadurch gekennzeichnet, dass** eine austauschbare Mischkammer (80) mit einem nach unten gerichteten Auslass (81) zur Bildung von Milchschaum vorgesehen ist.

16. Getränkeverkaufsautomat nach Anspruch 15, **dadurch gekennzeichnet, dass** im Gehäuse (77) eine Dampfleitung (79) verläuft, auf deren Ende die Mischkammer (80) aufsteckbar ist.

17. Getränkeverkaufsautomat nach Anspruch 15 oder 16, **dadurch gekennzeichnet, dass** die Mischkammer (80) nach Art eines Bajonettverschlusses am Gehäuse (77) einrastbar ist.

18. Getränkeverkaufsautomat nach einem der Ansprüche 14 bis 17, **dadurch gekennzeichnet, dass** am Gehäuse (77) ein Heisswasserauslass (85) und eine Kaffeeleitung (82) zur Ausgabe von Heisswasser bzw. Kaffee in ein unter dem Auslaufmodul (19) stehendes Gefäss (28) entlang geführt sind.

19. Getränkeverkaufsautomat nach einem der Ansprüche 14 bis 17, **dadurch gekennzeichnet, dass** das Tragelement (75) eine das Gehäuse (77) tragende Grundplatte (75a) aufweist, und dass in der Grundplatte (75a) Öffnungen (83, 84) für den Auslass von Sirup bzw. von einem unter Verwendung von Pulver angemischten Getränk vorgesehen sind.

## Claims

1. Beverage vending machine (10) having a housing (11) in which
first means (19,20,21,22,25,26) for brewing and dispensing a coffee beverage prepared with freshly ground coffee are accommodated, wherein the first means (14, 20, 21, 22, 25, 26) have a modular construction and
comprise at least one base module (20) for brewing the coffee beverage, and a separate outflow module (19) for dispensing the coffee beverage, which are in fluidic connection with one another via one or more fluid interfaces (F1, F2, F3), and wherein
the base module (20) comprises at least one coffee grinder (36), a brewing unit (37), second means (47a-c) for producing hot water, a fluid interface (F5) for connecting a water connection line (31), an electrical interface (E1) for connecting a power cord (30), and third means (32, 41, 42, 43) for controlling the beverage preparation and dispensing operation, and the third means (32, 41, 42, 43) comprise an operating/control part (32), and **characterized in that** the base module is a self-contained base module.

2. Beverage vending machine according to claim 1, **characterized in that** one or more additional modules (21, 25, 26, 27) is/are accommodated in the housing (11), which is/are in fluidic connection with the base module (20) and/or the outflow module (19) and/or with one another via corresponding fluid interfaces (F4, F6-F12).

3. Beverage vending machine according to claim 2, **characterized in that** the additional modules (21, 25, 26, 27) are electrically connected to the base module (20) via corresponding electrical interfaces (E2-E9), and are supplied with electrical power via the base module (20), and their function is controlled by the third means (32, 41, 42, 43) of the base module.

4. Beverage vending machine according to one of claims 2 to 3, **characterized in that** the additional modules (21,25,26,27) comprise one or more milk modules (21).

5. Beverage vending machine according to claim 4, **characterized in that** the beverage vending machine (10) includes an upper part (13a) and a lower part (13b), and that the milk module(s) (21) is/are arranged in the lower part (13b).

6. Beverage vending machine according to one of claims 2 to 6, **characterized in that** the additional modules (21,25,26,27) comprise one or more syrup modules (25).

7. Beverage vending machine according to one of claims 2 to 6, **characterized in that** the additional modules (21,25,26,27) comprise one or more powder modules (26).

8. Beverage vending machine according to one of claims 2 to 7, **characterized in that** the additional modules (21,25,26,27) comprise a cleaning module (27).

9. Beverage vending machine according to claim 6 or 8, **characterized in that** the syrup modules (25) or cleaning modules (27) are exchangeably fastened in a suspended manner to a vertical wall in the inside the beverage vending machine (10).

10. Beverage vending machine according to claim 9, **characterized in that** the syrup modules (25) and cleaning modules (27) each include a mounting (64) which is suspendable on the wall at a rear wall (66), and which is equipped with a bottom tray (65) for adjusting a syrup container (72) and cleaning agent container (89), and a pump housing (67) having a syrup pump (69) and cleaning agent pump (86), arranged therein.

11. Beverage vending machine according to claim 1, **characterized in that** the base module (20) is accommodated in its own, in particular splash-proof, housing (33) and is mounted upright in the beverage vending machine (10) via vibration-damping feet (44).

12. Beverage vending machine according to claim 11, **characterized in that** a pass-through opening (38) for the coffee grounds is arranged below the brewing unit (37) in the housing (33) of the base module (20).

13. Beverage vending machine according to claim 11 or 12, **characterized in that** a bean hopper (35) associated with the coffee grinder (36) is arranged above the at least one coffee grinder (36) and outside the housing (33) of the base module (20).

14. Beverage vending machine (10) according to one of claims 1 to 13, **characterized in that** the outflow module (19) comprises a support element (75) on which a detachable housing (77) for guiding various fluids, in particular milk and/or air and/or steam and/or hot water and/or coffee, and/or coffee, is fastened in a locking manner.

15. Beverage vending machine according to claim 14, **characterized in that** a replaceable mixing chamber (80) is provided with a downwardly directed outlet (81) for forming milk foam.

16. Beverage vending machine according to claim 15, **characterized in that** a steam line (79), on the end of which the mixing chamber (80) is attachable, extends in the housing (77).

17. Beverage vending machine according to claim 15 or 16, **characterized in that** the mixing chamber (80) is lockable on the housing (77) in the manner of a bayonet lock.

18. Beverage vending machine according to one of claims 14 to 17, **characterized in that** a hot water outlet (85) and a coffee line (82) for dispensing hot water or coffee into a vessel (28) situated below the outlet module (19) are guided along the housing (77).

19. Beverage vending machine according to one of claims 14 to 17, **characterized in that** the support element (75) includes a base plate (75a) supporting the housing (77), and that openings (83, 84) are provided in the base plate (75a) for the outlet of syrup or of a beverage mixed using powder.

## Revendications

1. Distributeur automatique de boissons (10) comportant un boîtier (11), dans lequel
des premiers moyens (19, 20, 21, 22, 25, 26) permettant l'infusion et la distribution d'une boisson au café préparée avec du café fraîchement moulu sont logés, les premiers moyens (14, 20, 21, 22, 25, 26) étant modulaires et
comprenant au moins un module de base (20) permettant l'infusion de la boisson au café ainsi qu'un module de sortie (19) séparé pour la distribution de la boisson au café, lesquels étant en liaison fluidique l'un avec l'autre par l'intermédiaire d'une ou de plusieurs interfaces de fluide (F1, F2, F3), et
le module de base (20) comprenant au moins un moulin à café (36), une unité d'infusion (37), des deuxièmes moyens (47a-c) permettant la production d'eau chaude, une interface de fluide (F5) permettant le raccord d'une conduite de raccordement d'eau (31), une interface électrique (E1) permettant le raccord d'une conduite de raccordement au secteur (30) ainsi que des troisièmes moyens (32, 41, 42, 43) permettant la commande du processus de préparation et de distribution de boissons, et les troisièmes moyens (32, 41, 42, 43) comprenant une partie de manipulation/commande (32), et **caractérisé en ce que** le module de base est un module de base autonome.

2. Distributeur automatique de boissons selon la revendication 1, **caractérisé en ce qu'un** ou plusieurs autres modules (21, 25, 26, 27) sont logés dans le boîtier (11), lesquels sont en liaison fluidique avec le module de base (20) et/ou avec le module de sortie (19) et/ou entre eux par l'intermédiaire d'interfaces de fluide (F4, F6-F12) correspondantes.

3. Distributeur automatique de boissons selon la revendication 2, **caractérisé en ce que** les autres modules (21, 25, 26, 27) sont en liaison électrique avec le module de base (20) par l'intermédiaire d'interfaces électriques (E2-E9) correspondantes et sont alimentés en énergie électrique par l'intermédiaire du module de base (20) et commandés dans leur fonction par les troisièmes moyens (32, 41, 42, 43) du module de base.

4. Distributeur automatique de boissons selon l'une des revendications 2 à 3, **caractérisé en ce que** les autres modules (21, 25, 26, 27) comprennent un ou plusieurs modules de lait (21).

5. Distributeur automatique de boissons selon la revendication 4, **caractérisé en ce que** le distributeur automatique de boissons (10) présente une partie supérieure (13a) et une partie inférieure (13b), et **en ce que** le ou les modules de lait (21) sont disposés dans la partie inférieure (13b).

6. Distributeur automatique de boissons selon l'une des revendications 2 à 6, **caractérisé en ce que** les autres modules (21, 25, 26, 27) comprennent un ou plusieurs modules de sirop (25).

7. Distributeur automatique de boissons selon l'une des revendications 2 à 6, **caractérisé en ce que** les autres modules (21, 25, 26, 27) comprennent un ou plusieurs modules de poudre (26).

8. Distributeur automatique de boissons selon l'une des revendications 2 à 7, **caractérisé en ce que** les autres modules (21, 25, 26, 27) comprennent un module de nettoyage (27).

9. Distributeur automatique de boissons selon la revendication 6 ou 8, **caractérisé en ce que** les modules de sirop (25) ou les modules de nettoyage (27) sont fixés suspendus et de manière à pouvoir être remplacés à une paroi verticale à l'intérieur du distributeur automatique de boissons (10).

10. Distributeur automatique de boissons selon la revendication 9, **caractérisé en ce que** les modules de sirop (25) ou les modules de nettoyage (27) présentent respectivement un dispositif de maintien (64) pouvant être suspendu à la paroi par une paroi arrière (66), lequel dispositif de maintien est équipé d'une coque de fond (65) permettant le réglage d'un réservoir de sirop (72) ou d'un réservoir d'agent de nettoyage (89) et d'un boîtier de pompe (67) comportant une pompe à sirop (69) ou une pompe d'agent de nettoyage (86) à l'intérieur de celui-ci.

11. Distributeur automatique de boissons selon la revendication 1, **caractérisé en ce que** le module de base (20) est logé dans un boîtier (33) individuel, en particulier protégé contre les éclaboussures d'eau, et est monté vertical dans le distributeur automatique de boissons (10) par l'intermédiaire de pieds amortissant les vibrations (44).

12. Distributeur automatique de boissons selon la revendication 11, **caractérisé en ce qu'une** ouverture de projection (38) pour le marc de café est disposée en dessous de l'unité d'infusion (37) dans le boîtier (33) du module de base (20).

13. Distributeur automatique de boissons selon la revendication 11 ou 12, **caractérisé en ce qu'un** réservoir de grains (35) associé au moulin à café (36) est disposé au-dessus de l'au moins un moulin à café (36) et à l'extérieur du boîtier (33) du module de base (20).

14. Distributeur automatique de boissons (10) selon l'une des revendications 1 à 13, **caractérisé en ce que** le module de sortie (19) comprend un élément de support (75) sur lequel un boîtier (77) amovible permettant le guidage de différents fluides, en particulier de lait et/ou d'air et/ou de vapeur et/ou d'eau chaude et/ou de café, est fixé de manière à pouvoir être encliqueté.

15. Distributeur automatique de boissons selon la revendication 14, **caractérisé en ce qu'une** chambre de mélange (80) pouvant être remplacée et comportant une sortie (81) dirigée vers le bas est prévue pour la formation de mousse de lait.

16. Distributeur automatique de boissons selon la revendication 15, **caractérisé en ce qu'une** conduite de vapeur (79) s'étend dans le boîtier (77), à l'extrémité de laquelle la chambre de mélange (80) peut être enfichée.

17. Distributeur automatique de boissons selon la revendication 15 ou 16, **caractérisé en ce que** la chambre de mélange (80) peut être encliquetée sur le boîtier (77) à la manière d'une fermeture à baïonnette.

18. Distributeur automatique de boissons selon l'une des revendications 14 à 17, **caractérisé en ce qu'**une sortie d'eau chaude (85) et une conduite de café (82) sont guidées sur le boîtier (77) pour la distribution d'eau chaude ou de café dans un récipient (28) situé sous le module de sortie (19).

19. Distributeur automatique de boissons selon l'une des revendications 14 à 17, **caractérisé en ce que** l'élément de support (75) présente une plaque de base (75a) supportant le boîtier (77), et **en ce que** des ouvertures (83, 84) sont prévues dans la plaque de base (75a) pour la sortie de sirop ou d'une boisson mélangée à l'aide de poudre.
